# EUROPÄISCHE PATENTANMELDUNG

(11) **EP 0 948 913 A1**
(43) Veröffentlichungstag der Anmeldung: **13.10.1999**
(21) Anmeldenummer: 98810301.6
(22) Anmeldetag: 08.04.1998
(51) Int. Cl.: A44C 5/20, F16B 45/06

(54) **Verschlusseinrichtung zum lösbaren Verbinden zweier Teile**

(71) Anmelder: Rosa, Luciano, 3250 Lyss (CH)
(72) Erfinder: Rosa, Luciano, 3250 Lyss (CH)
(74) Vertreter: BOVARD AG - Patentanwälte

(57) **Zusammenfassung**

Eine Verschlusseinrichtung (1) zum lösbaren Verbinden zweier Teile (4, 14), insbesondere Ketten, Bänder, Schnüre, Seile und dergleichen weist einen Halteteil (2) auf, an welchem ein hakenförmiges Element (8) um eine Schwenkachse (12) schwenkbar befestigt ist. Das hakenförmige Element (8) ist zum Öffnen der Verschlusseinrichtung aus der durch den Haken (10) gebildeten Ebene ausschwenkbar. Damit wird eine Verschlusseinrichtung (1) erreicht, welche einfach in der Herstellung und einfach geöffnet und geschlossen werden kann.

## Beschreibung

Die vorliegende Erfindung bezieht sich auf eine Verschlusseinrichtung zum lösbaren Verbinden zweier Teile, insbesondere Ketten, Bänder, Schnüre, Seile oder dergleichen, gemäss dem Oberbegriff des Patentanspruchs 1.

Derartige Verschlusseinrichtungen werden insbesondere auch bei Schmuckstücken verwendet, zum Beispiel für Halsketten. Hierbei sollte die Verschlusseinrichtung in ästhetischer Hinsicht zum entsprechenden Schmuckstück passen, das heisst es sollte insbesondere für feine Ketten nicht zu grosse Dimensionen aufweisen, andererseits sollte die Verschlusseinrichtung aber ein einfaches Öffnen und Schliessen ermöglichen.

Eine bekannte derartige Verschlusseinrichtung besteht beispielsweise aus einem rohrförmigen Element, das einen nicht vollständig geschlossenen Ring bildet. Der noch offene Bereich des Ringes wird durch einen innerhalb des Hohlraums verschiebbaren stabförmigen Teil verschlossen, der die gleiche Krümmung aufweist, wie der Ring. Dieser Stab wird mittels Federdruck in die geschlossene Stellung gedrückt. Zum Öffnen dieser Verschlusseinrichtung ist ein mit dem Stab verbundener Griff vorgesehen, der durch einen Längsschlitz über die Ringaussenseite vorsteht. Mit diesem Griff kann der Stab innerhalb des Rings entgegen dem Federdruck verschoben werden, der Verschluss wird geöffnet. Am Ring ist in den meisten Fällen noch ein zusätzlicher weiterer Ring befestigt, in welchem dann ein Kettenglied der Kette oder ein weiteres Verbindungsglied eingehängt ist. Die Befestigung dieses weiteren Rings wird üblicherweise durch Verschweissung oder Lötung erhalten.

Derartige Verschlüsse weisen den Nachteil auf, dass das Öffnen eine gewisse Geschicklichkeit der Bedienerperson erfordert. Des weiteren muss ein derartiger Verschluss eine gewisse Grösse aufweisen, damit er überhaupt noch bedienbar ist. Insbesondere bei sehr feinen Schmuckketten, die beispielsweise aus Gold bestehen, erweist sich ein derartiger Verschluss vor allem auch in ästhetischer Hinsicht als störend.

Auch bei anderen Verschlusseinrichtungen, die beispielsweise dem lösbaren Verbinden von Kettenenden oder Seilenden dienen, ist oftmals das Öffnen der Verschlusseinrichtung nicht in einfacher Weise vorzunehmen, insbesondere wenn die entsprechende Person Handschuhe als Schutz vor Kälte oder als Schutz vor Verletzungen trägt.

Die Aufgabe der vorliegenden Erfindung besteht darin, eine Verschlusseinrichtung zu schaffen, die eine gute Bedienbarkeit ermöglicht und die einfach ist im Aufbau, und mit welcher die obengenannten Nachteile vermieden werden.

Erfindungsgemäss erfolgt die Lösung dieser Aufgabe durch die im Anspruch 1 angegebenen Merkmale.

Des weiteren soll diese erfindungsgemässe Verschlusseinrichtung die Anforderungen in ästhetischer Hinsicht erfüllen, die insbesondere bei der Verwendung als Verschlusseinrichtung in Schmuckstücken verlangt werden.

Des weiteren soll die erfindungsgemässe Verschlusseinrichtung so ausgestaltet sein, dass zu deren Herstellung kein Schweissen oder Löten erforderlich ist.

Mit dieser erfindungsgemässen Verschlusseinrichtung wird in optimaler Weise eine gute Bedienbarkeit erreicht. Das Öffnen und Schliessen dieser Verschlusseinrichtung kann in einfacher Weise durch Ausschwenken des hakenförmigen Elementes erreicht werden, was auch bei sehr kleinen Ausführungsformen, wie sie beispielsweise für Schmuckgegenstände, insbesondere Ketten, verwendet werden, mühelos erfolgen kann.

In vorteilhafter Weise ist am Halteteil ein Verschliessbereich vorgesehen, der sich gegen den spitzenseitigen Endbereich des Hakens erstreckt und im geschlossenen Zustand mit dem spitzenseitigen Endbereich des Hakens in Kontakt ist. Dadurch kann die Öffnung des hakenförmigen Elementes relativ gross ausgestaltet sein, was ein Einhängen und Aushängen des zu befestigenden Teils erleichtert.

Eine vorteilhafte Ausgestaltung der Erfindung besteht darin, dass der Halteteil zwei Schenkel aufweist, die im wesentlichen parallel zueinander verlaufen und zwischen welchen der hintere Endbereich des hakenförmigen Elements angeordnet ist. Dadurch kann in einfacher Weise die Schwenkachse, um welche das hakenförmige Element schwenkbar ist, befestigt werden. In vorteilhafter Weise ist der eine der beiden Schenkel mit einer Verlängerung ausgestattet, die den Verschliessbereich bildet.

Eine einfache Herstellung des Halteteils wird dadurch erreicht, dass dieser aus einem stabförmigen Stück durch Umbiegen gebildet wird und eine Schlaufe entsteht, in welche einer der beiden zu verbindenden Teile engehängt werden kann. Dadurch ist kein zusätzliches Element zur Aufnahme dieses Teils erforderlich, die, wie bereits erwähnt, meistens durch Schweissen oder Löten am entsprechenden Halteteil befestigt werden müssen.

Eine weitere vorteilhafte Ausgestaltung der Erfindung besteht darin, dass zwischen dem verschwenkbaren hakenförmigen Element und dem Halteteil eine Schnappvorrichtung angebracht ist. Mit dieser Schnappvorrichtung wird erreicht, dass das hakenförmige Element, wenn es in den geschlossenen Zustand gebracht worden ist, in diesem Zustand gehalten wird, so dass ein unbeabsichtigtes Öffnen der Verschlusseinrichtung vermieden werden kann. Diese Schnappvorrichtung besteht in vorteilhafter Weise aus einem vorspringenden Teil und einer Vertiefung, die jeweils am Halteteil bzw. am verschwenkbaren hakenförmigen Element angebracht ist, was eine sehr einfache Herstellung ermöglicht. Im geschlossenen Zustand der Verschlusseinrichtung kommt der vorspringende Teil in die Vertiefung zu liegen.

Die Schnappvorrichtung kann je nach Ausgestaltung der Verschlusseinrichtung im spitzenseitigen Endbereich des verschwenkbaren hakenförmigen Elements und dem Verschliessbereich des Halteteils angeordnet werden, diese Schnappvorrichtung kann aber auch in der Nähe der Schwenkachse angeordnet sein.

Eine weitere vorteilhafte Ausgestaltung der Erfindung besteht darin, dass zwischen spitzenseitigem Endbereich des hakenförmigen Elements und im Verschliessbereich des Halteteils eine Kopplungsvorrichtung angebracht ist. Mit dieser Kopplungsvorrichtung wird zwischen Halteteil und schwenkbarem hakenförmigen Element in verschlossenem Zustand eine formschlüssige Verbindung gebildet. Dadurch wird erreicht, dass durch die Verschlusseinrichtung grössere Zugkräfte aufgenommen werden können, ohne dass das hakenförmige Element beispielsweise aufgebogen wird.

Eine weitere vorteilhafte Ausführungsform der Erfindung besteht darin, dass die Verschlusseinrichtung mit einer Verriegelungsvorrichtung ausgestattet ist, mit welcher ein Ausschwenken des hakenförmigen Elementes im verriegelten Zustand verunmöglicht wird. Dadurch kann die Sicherheit vor unbeabsichtigtem Öffnen der Verschlusseinrichtung gewährleistet werden.

Weitere vorteilhafte Ausgestaltungsformen ergeben sich aus den weiteren abhängigen Ansprüchen.

Ausführungsformen der vorliegenden erfindungsgemässen Verschlusseinrichtung werden nachfolgend anhand der beiliegenden Zeichnung beispielhaft näher erläutert.

Es zeigt
Fig. 1 eine Ansicht von oben auf eine erste Ausführungsform einer erfindungsgemässen Verschlusseinrichtung im geschlossenen Zustand;
Fig. 2 eine Seitenansicht auf die erfindungsgemässe Verschlusseinrichtung gemäss Fig. 1;
Fig. 3 eine Seitenansicht der erfindungsgemässen Verschlusseinrichtung gemäss Fig. 1 und 2 im geöffneten Zustand;
Fig. 4 in räumlicher Darstellung eine weitere Ausführungsform einer erfindungsgemässen Verschlusseinrichtung in geschlossenem Zustand;
Fig. 5 eine räumliche Darstellung der erfindungsgemässen Verschlusseinrichtung gemäss Fig. 4 im geöffneten Zustand;
Fig. 6 eine Ansicht von oben auf eine erfindungsgemässe Verschlusseinrichtung, bei welchem der Halteteil an einem Körper befestigt ist;
Fig. 7 eine Draufsicht auf eine Ausführungsform einer erfindungsgemässen Verschlusseinrichtung mit anders gestaltetem Verschliessbereich;
Fig. 8 und 9 die Darstellung einer weiteren Ausführungsform einer erfindungsgemässen Verschlusseinrichtung mit Schnappeinrichtung, die vor der Schwenkachse angeordnet ist;
Fig. 10 und 11 eine Darstellung einer erfindungsgemässen Verschlusseinrichtung mit Schnappeinrichtung, die hinter der Schwenkachse angeordnet ist;
Fig. 12 bis 14 eine Darstellung einer erfindungsgemässen Verschlusseinrichtung, bei welcher der Halteteil und das hakenförmige Element aus Plattenzuschnitten gebildet ist; und
Fig. 15 bis 17 die Darstellung einer weiteren Ausführungsform einer erfindungsgemässen Verschlusseinrichtung mit Kopplungsvorrichtung und Verriegelungsvorrichtung.

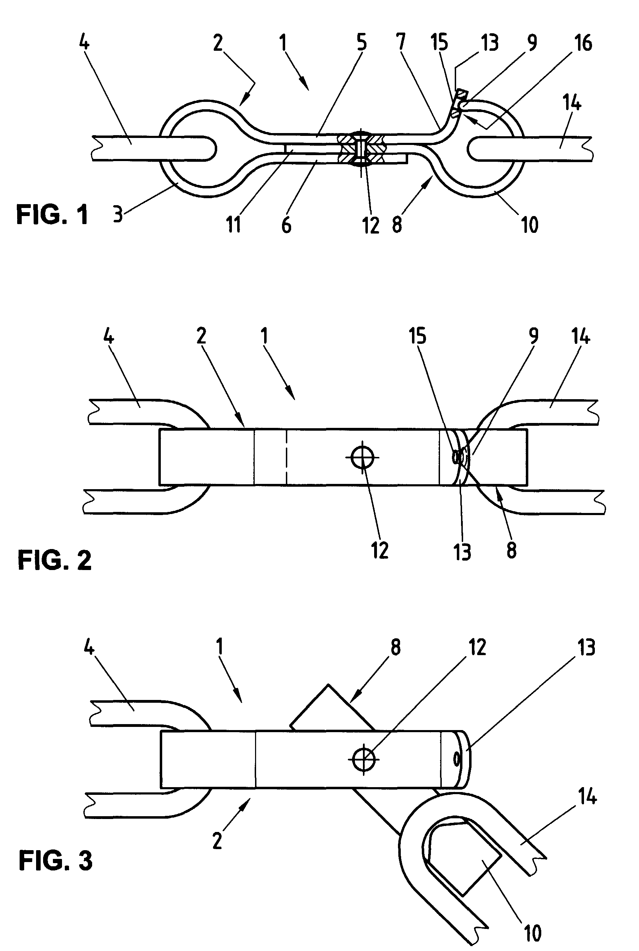

Die Verschlusseinrichtung 1 gemäss Fig. 1 besteht aus einem Halteteil 2, der aus einem stabförmigen Stück geformt ist. Dieses stabförmige Stück ist umgebogen und bildet eine Schlaufe 3. In die Schlaufe 3 ist einer der zu verbindenden Teile 4 eingehängt, beispielsweise ein Kettenglied. Durch das Umbiegen des stabförmigen Stücks werden zwei Schenke 5 und 6 erhalten, die jeweils einen Bereich umfassen, die parallel zueinander verlaufen. Einer der Schenkel 5 oder 6, im vorliegenden Ausführungsbeispiel der Schenkel 5, ist mit einer Verlängerung 7 ausgestattet.

Die Verschlusseinrichtung 1 umfasst des weiteren ein hakenförmiges Element 8, das einen Haken 10 mit einem spitzenseitigen Endbereich 9 und einem hinteren Endbereich 11 aufweist. Dieser hintere Endbereich 11 kommt zwischen die beiden Schenkel 5 und 6 des Halteteils 2 zu liegen. Diese beiden Schenkel 5 und 6 und der hintere Endbereich 11 des hakenförmigen Elementes 8 werden durch eine die Form eines Bolzens aufweisende Schwenkachse 12 durchdrungen. Diese Schwenkachse kann durch nietenförmige Verdickung in den Endbereichen im Halteteil 2 fixiert werden. Denkbar wäre auch, diese Schwenkachse 12 in Form einer Schraube auszubilden, die beispielsweise in einen der beiden entsprechend ausgerüsteten Schenkel 5 oder 6 einschraubbar ist.

Im geschlossenen Zustand der Verschlusseinrichtung 1, wie dies in Fig. 1 dargestellt ist, steht der spitzenseitige Endbereich 9 des hakenförmigen Elementes 8 in Kontakt mit dem Verschliessbereich 13, der das Ende der Verlängerung 7 bildet. Dadurch wird praktisch ein geschlossener Ring gebildet, der Teil 14, der in den Haken 10 des hakenförmigen Elementes eingehängt ist, kann ohne Öffnen des hakenförmigen Elementes 8 nicht ausgehängt werden.

Im Verschliessbereich 13 des Halteteils 2 ist eine Öffnung 15 angebracht. Im geschlossenen Zustand der Verschlusseinrichtung 1 ragt der spitzenseitige Endbereich 9 geringfügig in diese Öffnung 15 hinein. Dadurch wird eine Schnappvorrichtung 16 gebildet, was bedeutet, dass zum Öffnen bzw. zum Schliessen der Verschlusseinrichtung 1 der Haken 10 und die Verlängerung 7 geringfügig auffedern, so dass im geschlossenen Zustand der Verschlusseinrichtung zum Öffnen zuerst ein Widerstand überwunden werden muss. Dadurch wird ein unbeabsichtigtes Öffnen der Verschlusseinrichtung verhindert.

Wie aus Fig. 1 und Fig. 2 ersichtlich ist, ist dieses Ausführungsbeispiel aus stabförmigen Stücken gebildet, die eine rechteckförmige Querschnittform aufweisen. Wie aus Fig. 2 ersichtlich ist, ist der spitzenförmige Endbereich 9 des Hakens 10 zugespitzt, so dass er in die Öffnung 15 des Halteteils 2 geringfügig eindringen kann. Der Verschliessbereich 13 des Halteteils ist bezüglich der Schwenkachse 12 leicht gebogen, damit der spitzenseitige Endbereich 9 beim Verschwenken des hakenförmigen Elements 8 in die Öffnung 15 gelangen kann.

Im aufgeschwenkten Zustand der Verschlusseinrichtung, wie dies in Fig. 3 dargestellt ist, gibt der Verschliessbereich 13 den offenen Teil des Hakens 10 frei. Der in den Haken 10 eingehängte Teil 14 kann ohne weiteres aus dem Haken 10 ausgehängt werden.

Wie aus der Fig. 3 ersichtlich ist, kann das Öffnen der Verschlusseinrichtung 1 in sehr einfacher Weise vorgenommen werden, indem lediglich das hakenförmige Element 8 um die Schwenkachse 12 bezüglich des Halteteils 2 verschwenkt werden muss. Dieses Verschwenken kann auch ausgeführt werden bei Verschlusseinrichtungen 1, die sehr kleine Dimensionen aufweisen, und die insbesondere bei Schmuckstücken verwendet werden, wie beispielsweise bei feingliedrigen Ketten.

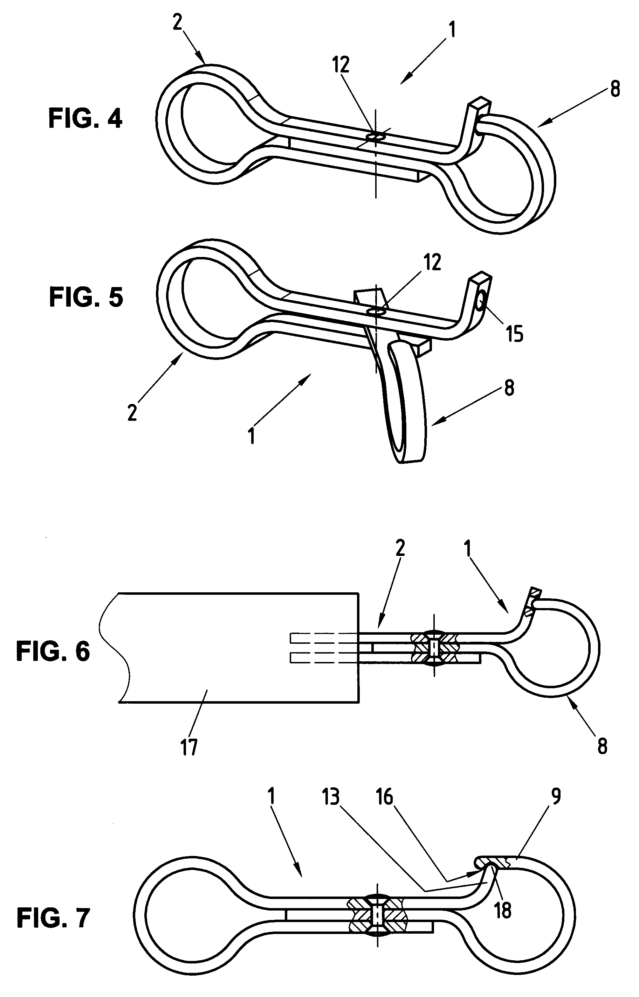

Die Fig. 4 und 5 zeigen eine Ausführungsform einer Verschlusseinrichtung 1, die in identischer Weise aufgebaut ist, wie diejenige, die in den Fig. 1 bis 3 dargestellt worden ist. Der Unterschied besteht darin, dass die stabförmigen Stücke, aus welchen sowohl der Halteteil 2 als auch das hakenförmige Element 8 gebildet worden sind, eine nahezu quadratische Querschnittsfläche aufweisen.

Selbstverständlich ist man bei der Auswahl der Querschnittsformen des Ausgangsmaterials, mit welchem der Halteteil 2 und das hakenförmige Element 8 gebildet werden, nicht an solche gebunden, die in den dargestellten Ausführungsbeispielen verwendet worden sind. Denkbar sind ohne weiteres auch Profile als Ausgangsmaterial, die eine runde, ovale oder sonstige Querschnittsform aufweisen, je nach Verwendungszweck. Auch das Material, aus welchem die Verschlusseinrichtung gefertigt ist, kann praktisch frei gewählt werden, es muss lediglich die Voraussetzungen bezüglich erforderlichen Festigkeiten und gegebenenfalls der möglichen Verformungen erfüllen.

In Fig. 6 ist ein weiteres Ausführungsbeispiel gezeigt, bei welchem der Halteteil 2 der Verschlusseinrichtung 1 nicht eine Schlaufe bildet, sondern in einem Körper 17 befestigt ist, der irgend einen Gegenstand bilden kann. Die Verbindung zwischen Halteteil 2 und hakenförmigen Element 8 ist in identischer Weise ausgebildet, wie dies in den vorher beschriebenen Ausführungsbeispielen der Fall ist.

Fig. 7 zeigt eine Ausführungsform einer Verschlusseinrichtung 1, die im Prinzip die gleichen Elemente aufweist, wie die unter Fig. 1 bis 5 beschriebenen Ausführungsbeispiele. Der Unterschied zu den vorgenannten Beispielen besteht darin, dass der spitzenseitige Endbereich 9 des Hakens 10 und der Verschliessbereich 13 anders ausgestaltet sind. Der spitzenseitige Endbereich 9 überragt den Verschliessbereich 13 aussenseitig und ist mit einer Vertiefung 18 ausgestattet. Der Verschliessbereich 13 ragt im geschlossenen Zustand der Verschlusseinrichtung 1, wie in Fig. 7 dargestellt ist, in diese Vertiefung 18 des spitzenseitigen Endbereichs 9 hinein. Dadurch wird, wie vorgängig beschrieben, eine entsprechende Schnappvorrichtung 16 gebildet.

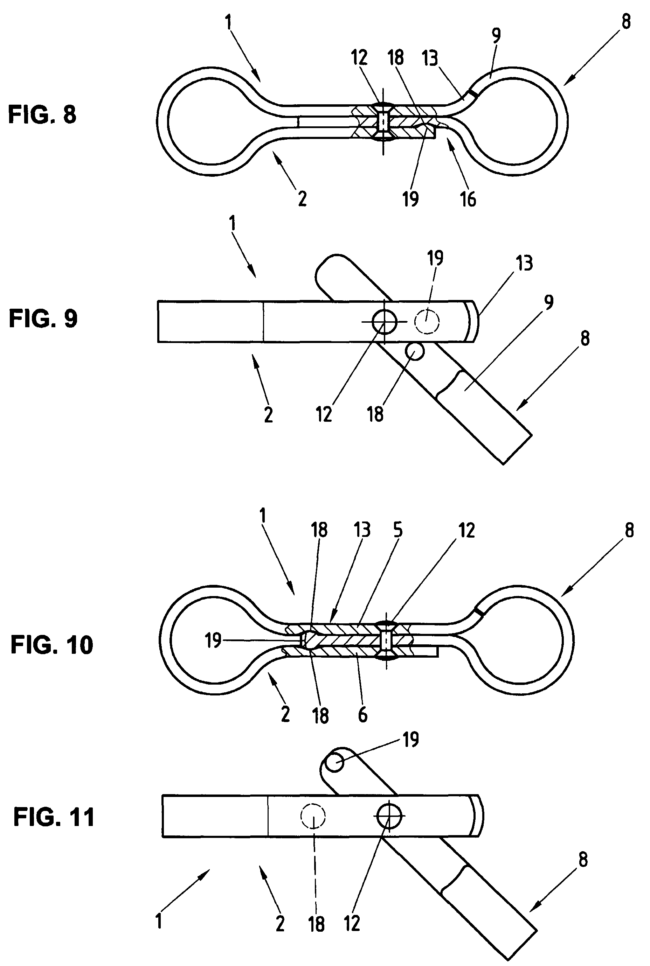

Die Fig. 8 und 9 zeigen eine weitere Ausführungsform der Verschlusseinrichtung 1. Der Verschliessbereich 13 und der spitzenseitige Endbereich 9 des hakenförmigen Elementes 8 stossen in diesem Ausführungsbeispiel, wie aus Fig. 8 ersichtlich ist, stirnseitig aufeinander. Mit dieser Ausgestaltung wird kein überstehender Teil erhalten. Die Schnappvorrichtung 16 ist vor der Schwenkachse 12 vorgesehen, wobei im hakenförmigen Element 8 eine Vertiefung 18 und am Schenkel 6 ein vorspringender Teil 19 angeordnet sind. Erforderlichenfalls kann die Schwenkachse 12 so in den beiden Schenkel 5 und 6 gehalten sein, dass ein leichtes elastisches Aufspreizen der beiden Schenkel 5 und 6 ermöglicht wird, wenn die Verschlusseinrichtung 1 geöffnet oder geschlossen wird.

Wie aus Fig. 9 ersichtlich ist, ist das stirnseitige Ende des Verschliessbereichs 13 und das stirnseitige Ende des spitzenseitigen Endbereichs 9 des hakenförmigen Elementes 8 bezüglich der Schwenkachse 12 mit einem Radius versehen, so dass die Verschlusseinrichtung 1 geschlossen und geöffnet werden kann, ohne dass zwischen den entsprechenden Teilen ein grosser Spalt vorhanden sein muss.

Eine praktisch gleiche Ausführungsform der Verschlusseinrichtung 1, wie diejenige, die in den Fig. 8 und 9 dargestellt ist, ist aus den Fig. 10 und 11 ersichtlich. Der einzige Unterschied besteht in der örtlichen Anordnung der Schnappeinrichtung 13. Diese ist in diesem Ausführungsbeispiel hinter der Schwenkachse 12 vorgesehen. Diese Schnappvorrichtung besteht wiederum aus einer Vertiefung 18, die an einem oder beiden Schenkeln 5 oder 6 des Halteteils 2 angebracht sind, und einer entsprechend auf dem hakenförmigen Element 8 angebrachten vorspringenden Teil 19.

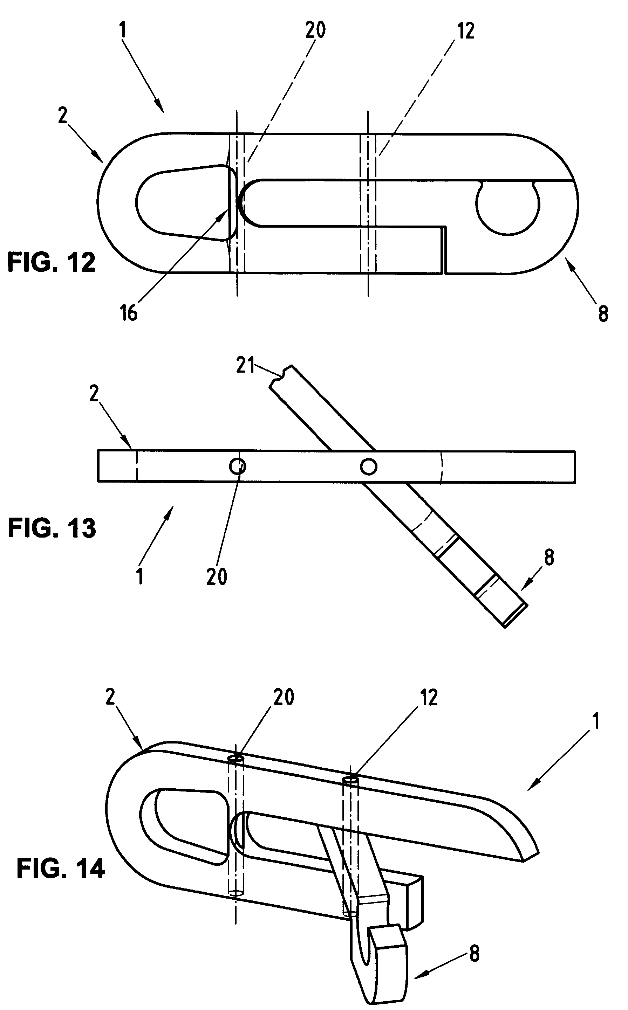

Ein weiteres Ausführungsbeispiel einer erfindungsgemässen Verschlusseinrichtung 1 ist in den Fig. 12 bis 14 dargestellt. Der Halteteil 2 und das hakenförmige Element 8 können hierbei aus einem plattenförmigen Grundkörper ausgeschnitten, beispielsweise ausgestanzt sein. Das hakenförmige Element 8 ist wie in den vorhergehenden Ausführungsbeispielen in identischer Weise um eine Schwenkachse 12 schwenkbar, die im Halteteil gehalten ist. Die Schnappvorrichtung 16 ist in diesem Ausführungsbeispiel durch einen federnden Stift 20 gebildet, der im hinteren Bereich des Halteteils 2 eingesetzt ist. Mit diesem federnden Stift 20 wirkt eine Ausnehmung 21 zusammen, die am hinteren Ende des hakenförmigen Elementes angebracht ist, und in welche der federnde Stift 20 beim Schliessen der Verschlusseinrichtung 1 einschnappt.

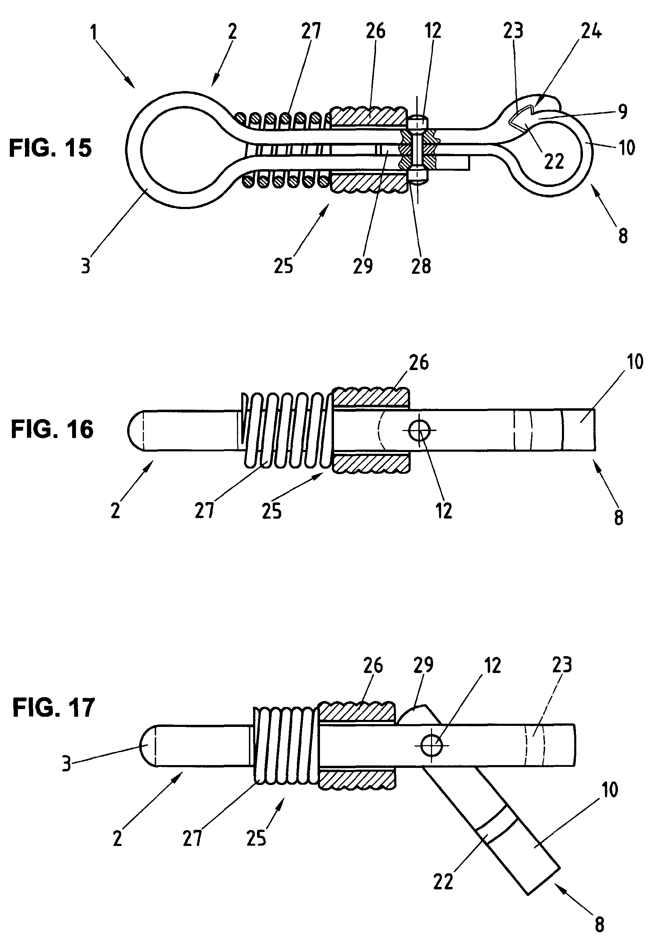

In den Fig. 15 bis 17 ist eine weitere Ausführungsform der erfindungsgemässen Verschlusseinrichtung 1 dargestellt. Der Grundaufbau dieser Verschlusseinrichtung ist gleich wie derjenige, der in den vorhergehenden Ausführungsbeispielen beschrieben worden ist. In diesem Ausführungsbeispiel ist im Bereich des spitzenseitigen Endbereichs 9 des hakenförmigen Elementes 8 ein vorstehender Nocken 22 angebracht. Dieser Nocken 22 greift, wie insbesondere aus Fig. 15 entnehmbar ist, in eine entsprechend ausgebildete Ausnehmung 23, die im verschlossenen Zustand der Verschlusseinrichtung 1 den vorstehenden Nocken 22 passend aufnehmen kann. Dadurch wird eine Kopplungsvorrichtung 24 gebildet, mittels welcher zwischen Halteteil 2 und hakenförmigem Element eine formschlüssige Verbindung gebildet wird. Dadurch kann die Last, welche durch das hakenförmige Element 8 aufgenommen werden kann, vergrössert werden, ohne dass die Gefahr besteht, dass der Haken 10 des hakenförmigen Elementes aufgeweitet wird, so dass ein eingehängtes Teil beispielsweise herausspringen könnte.

Um zu vermeiden, dass ein unbeabsichtigtes Öffnen der Verschlusseinrichtung erfolgen kann, ist eine Verriegelungsvorrichtung 25 vorgesehen Diese Verriegelungsvorrichtung 25 besteht aus einer Hülse 26, die die beiden Schenkel 5 und 6 des Halteteils 2 umschliesst und entlang dieser verschiebbar ist. Zwischen dieser Hülse 26 und der Schlaufe 3 des Halteteils 2 ist eine Druckfeder 27 eingesetzt. Die Schwenkachse 12 ist so ausgebildet, dass deren Endbereiche vorstehend sind und einen Anschlag 28 für die Hülse 26 bilden. Im geschlossenen Zustand der Verschlusseinrichtung 1, wie er in Fig. 15 dargestellt ist, ist die Hülse 26 über den hinteren Endbereich 29 des hakenförmigen Elementes geschoben, bis zum Anschlag 28. Dadurch wird vermieden, dass das hakenförmige Element verschwenkt werden kann, die Verschlusseinrichtung ist im verriegelten Zustand.

In Fig. 16 ist ebenfalls diese verriegelte Position dargestellt.

Um nun die Verschlusseinrichtung 1 öffnen zu können, wird die Hülse 26 gegen die Schlaufe 3 hin verschoben, die Druckfeder 27 wird zusammengedrückt. Das hakenförmige Element kann nun um die Schwenkachse 12 verschwenkt werden, das im Haken 10 eingehängte Teil kann beispielsweise ausgehängt werden. Der hintere Endbereich 29 des hakenförmigen Elementes 8 kann mit einer Abrundung versehen sein. Wie dies in Fig. 17 dargestellt ist, kann dadurch die Hülse 26 in der hinteren Position, bei welcher die Feder 27 gespannt ist, gehalten werden. Wenn das hakenförmige Element 8 durch Verschwenken um die Schwenkachse 12 in die geschlossene Position gebracht wird, gibt der hintere Endbereich 29 des hakenförmigen Elementes 8 die Hülse 26 frei, diese wird durch die Druckfeder 27 gegen den Haken 10 hin verschoben, bis er am Anschlag 28, gebildet durch die Schwenkachse 12, anstösst. Die Verschlusseinrichtung 1 ist dann wieder verriegelt.

Es ist klar, dass alle zusätzlichen Vorrichtungen, wie beispielsweise die Verriegelungsvorrichtung 25 oder die Kopplungsvorrichtung 24 auch in weiteren Ausführungsbeispielen einer erfindungsgemässen Verschlusseinrichtung 1 angebracht werden können.

Bei den vorgängig beschriebenen Ausführungsbeispielen ist jeweils der Halteteil 2 mit zwei Schenkeln 5 und 6 ausgestattet. Selbstverständlich ist es denkbar, dass beispielsweise der Schenkel 6 weggelassen werden kann, so dass nur ein Schenkel 5 mit der angeformten Verlängerung 7 vorgesehen ist, wobei dieser Schenkel 5 auch die Schlaufe 3 noch bildet.

Mit dieser Erfindung wird eine Verschlusseinrichtung geschaffen, deren Anwendung sehr vielfältig ist, und die insbesondere einfach in der Herstellung und in der Bedienbarkeit ist.

## Patentansprüche

1. Verschlusseinrichtung (1) zum lösbaren Verbinden zweier Teile (4, 14), insbesondere Ketten, Bänder, Schnüre, Seile und dgl., mit mindestens einem einen Haken (10) bildenden hakenförmigen Element (8), das an einem Halteteil (2) angebracht ist, der seinerseits an einem Trägerelement (4) befestigbar ist, und das mittels einem beweglichen Teil zu öffnen und zu schliessen ist und im geschlossenen Zustand im wesentlichen ein ringförmiges Element zur Aufnahme eines weiteren Rings oder einer Schlaufe (14) eines an der Verschlusseinrichtung (1) zu befestigenden Elements umfasst, dadurch gekennzeichnet, dass das hakenförmige Element (8) durch den beweglichen Teil gebildet ist, welcher um eine Schwenkachse (12) schwenkbar ist, die am Halteteil (2) angebracht ist und die so ausgerichtet ist, dass das hakenförmige Element (8) aus der durch den Haken (10) gebildeten Ebene ausschwenkbar ist.

2. Verschlusseinrichtung nach Anspruch 1, dadurch gekennzeichnet, dass der Halteteil (2) einen Verschliessbereich (13) aufweist, der sich gegen den spitzenseitigen Endbereich (9) des Hakens (10) erstreckt und im geschlossenen Zustand mit dem spitzenseitigen Endbereich (9) des Hakens (10) in Kontakt ist.

3. Verschlusseinrichtung nach Anspruch 1 oder 2, dadurch gekennzeichnet, dass der Halteteil (2) mindestens einen Schenkel (5; 6) aufweist, der mindestens einen Bereich aufweist, der zum hinteren Endbereich des hakenförmigen Elements (8) im wesentlichen parallel ausgerichtet ist, in welchem Bereich die Schwenkachse (12) angeordnet ist.

4. Verschlusseinrichtung nach Anspruch 3, dadurch gekennzeichnet, dass der Halteteil (2) zwei Schenkel (5, 6) aufweist, die jeweils einen Bereich umfassen, die im wesentlichen parallel zueinander verlaufen und zwischen welchen der hintere Endbereich des hakenförmigen Elements (8) angeordnet ist und um die Schwenkachse (12) schwenkbar ist, die die beiden Bereiche der zwei Schenkel (5, 6) und den hinteren Endbereich des hakenförmigen Elements (8) durchdringt, und dass der eine der beiden Schenkel (5) mit einer Verlängerung (7) ausgestattet ist, die den Verschliessbereich (13) bildet und so geformt ist, dass sie im geschlossenen Zustand mit dem spitzenseitigen Endbereich (9) des Hakens (10) in Kontakt steht.

5. Verschlusseinrichtung nach Anspruch 4, dadurch gekennzeichnet, dass der Halteteil (2) durch Umbiegen aus einem stabförmigen Stück geformt ist und eine Schlaufe (3) bildet und die den Verschliessbereich (13) bildende Verlängerung (7) umfasst.

6. Verschlusseinrichtung nach Anspruch 4, dadurch gekennzeichnet, dass der Halteteil (2) und das hakenförmige Element (8) durch Ausschneiden, insbesondere Ausstanzen, aus einer Platte gebildet sind.

7. Verschlusseinrichtung nach einem der Ansprüche 1 bis 6, dadurch gekennzeichnet, dass zwischen dem verschwenkbaren hakenförmigen Element (8) und dem Halteteil (2) eine Schnappvorrichtung (16) angebracht ist, welche das verschwenkbare hakenförmige Element (8) in geschlossenem Zustand hält.

8. Verschlusseinrichtung nach Anspruch 7, dadurch gekennzeichnet, dass die Schnappvorrichtung (16) aus einem vorspringenden Teil (19; 20), der am Halteteil (2) oder am verschwenkbaren hakenförmigen Element (8) angebracht ist, und einer Vertiefung (18; 21), die am verschwenkbaren hakenförmigen Element (8) oder am Halteteil (2) angebracht ist, besteht, derart dass der vorspringende Teil (19; 20) im geschlossenen Zustand der Verschlusseinrichtung (1) in die Vertiefung (18; 21) zu liegen kommt.

9. Verschlusseinrichtung nach Anspruch 7 oder 8, dadurch gekennzeichnet, dass die Schnappvorrichtung (16) im spitzenseitigen Endbereich (9) des verschwenkbaren hakenförmigen Elements (8) und dem Verschliessbereich (13) des Halteteils (2) angeordnet ist.

10. Verschlusseinrichtung nach Anspruch 7 oder 8, dadurch gekennzeichnet, dass die Schnappvorrichtung (16) benachbart zur Schwenkachse (12) angeordnet ist.

11. Verschlusseinrichtung nach einem der Ansprüche 1 bis 10, dadurch gekennzeichnet, dass im Bereich des spitzenseitigen Endbereichs (9) und im Verschliessbereich (13) des Halteteils (2) eine Kopplungsvorrichtung (24) angebracht ist, mittels welcher zwischen Halteteil (2) und schwenkbarem hakenförmigem Element (8) im verschlossenen Zustand eine formschlüssige Verbindung gebildet ist.

12. Verschlusseinrichtung nach Anspruch 11, dadurch gekennzeichnet, dass die Kopplungsvorrichtung (24) aus einem am Halteelement (2) oder am schwenkbaren hakenförmigen Element (8) angebrachten vorstehenden Nocken (22) und einer am hakenförmigen Element (8) bzw. am Halteteil (2) angebrachten Ausnehmung (23) besteht, in welche der Nocken (22) beim Verschliessen der Verschlusseinrichtung (1) passend einfährt.

13. Verschlusseinrichtung nach einem der Ansprüche 1 bis 12, dadurch gekennzeichnet, dass eine Verriegelungsvorrichtung (25) zum Verriegeln des schwenkbaren hakenförmigen Elementes (8) bezüglich des Halteteils (2) im geschlossenen Zustand vorgesehen ist.

14. Verschlusseinrichtung nach Anspruch 13, dadurch gekennzeichnet, dass die Verriegelungsvorrichtung (25) aus einer Hülse (26) besteht, die im Bereich der Schwenkachse (12) entlang des Halteteils (2) verschiebbar ist und zur Verriegelung über den dem Haken (10) abgewandten Teil des hakenförmigen Elements (8) in die Verriegelungsposition schiebbar ist.

15. Verschlusseinrichtung nach Anspruch 14, dadurch gekennzeichnet, dass am Halteteil (2) ein elastisches Element (27) vorgesehen ist, mittels welchem die Hülse (26) federnd in die Verriegelungsposition drückbar ist.

16. Verschlusseinrichtung nach Anspruch 14 oder 15, dadurch gekennzeichnet, dass die Schwenkachse (12) mindestens einseitig über den Halteteil (2) vorsteht und als Anschlag (28) für die Hülse (26) in der Verriegelungsposition dient.
